# EUROPÄISCHE PATENTSCHRIFT

(11) **EP 0 731 104 B1**
(45) Veröffentlichungstag und Bekanntmachung des Hinweises auf die Patenterteilung: **09.04.1997**
(21) Anmeldenummer: 96103534.2
(22) Anmeldetag: 07.03.1996
(51) Int. Cl.: C07F 7/14

(54) **Verfahren zur Herstellung von Alkylsilanen mit sperrigen Alkylresten**
Process for the preparation of alkylsilanes containing bulky alkyl groups
Procédé de préparation d'alkylsilanes contenant des groupements alkyls encombrantes

(30) Priorität: 09.03.1995 DE 19508459
(43) Veröffentlichungstag der Anmeldung: 11.09.1996
(73) Patentinhaber: Wacker-Chemie GmbH, 81737 München (DE)
(72) Erfinder: Reitmeier, Rudolf, Dr., 84489 Burghausen (DE); Lindner, Tassilo, Dr., 84489 Burghausen (DE); Bräunling, Hermann, Dr., 84489 Burghausen (DE); Menzel, Hartmut, Dr., 84489 Burghausen (DE)
(74) Vertreter: Fritz, Helmut, Dr.

(56) Entgegenhaltungen:
- EP-A- 0 596 646
- EP-A- 0 602 922
- US-A- 5 424 470

## Beschreibung

Die Erfindung betrifft ein Verfahren zur Herstellung von Di- und Trialkylsilanen mit sperrigen Alkylresten durch Hydrosilylierung von wasserstoffhaltigen Silanen mit Alkenen in Gegenwart von Übergangsmetallkatalysator und Aktivator.

Beispielsweise werden Dialkyldialkoxysilane mit sperrigen Alkylresten am Silicium inzwischen von fast allen größeren Polypropylenherstellern für ihre Ziegler-Katalysatoren der neuesten Generation gesucht. Besonders gefragt sind dabei Silane mit kurzkettigen, verzweigten Alkyl- sowie Cycloalkylgruppen. Diese Silane wurden bis vor kurzem technisch ausschließlich ausgehend von Chlorsilanen oder Alkoxysilanen auf dem teueren metallorganischen Weg, d. h. unter Einsatz von großen Mengen an Metallen wie Natrium oder Magnesium sowie Lösungsmitteln hergestellt, wobei dementsprechend viel metallhaltige Nebenprodukte zu entsorgen waren.

Alkyl- oder Dialkylsilane, bei denen mindestens einer der Alkylreste mindestens 2 Kohlenstoffatome aufweist und die neben direkt an Silicium gebundenem Wasserstoff noch Chloratome oder Alkoxyreste aufweisen, addieren in Gegenwart von Edelmetallkatalysatoren in zufriedenstellender Weise nur an lineare Alkene mit endständiger Doppelbindung, sogenannte α-Olefine. So führt beispielsweise die Hydrosilylierung von Silanen, wie Dichlorsilan, die 2 direkt an Silicium gebundene Wasserstoffatome aufweisen, mit verzweigten oder cyclischen Alkenen, die mindestens 4 Kohlenstoffe aufweisen, nur zu einem Monoalkylchlorsilan, auch wenn Alken im Überschuß vorliegt.

In der EP-A-602 922 ist ein Verfahren zur zweifachen Hydrosilylierung von Chloratome oder Alkoxyreste aufweisenden Silanen, die 2 direkt an Silicium gebundene Wasserstoffatome aufweisen, mit cyclischen Alkenen die mindestens 4 Kohlenstoffe aufweisen, in Gegenwart von Sauerstoff beschrieben. Jedoch ist die beschriebene Sauerstoffeinleitung aufwendig und insbesondere gefährlich, da die ohnehin leicht brennbaren wasserstoffhaltigen Silane mit Sauerstoff und den weiteren Reaktionskomponenten zündfähige Gemische bilden können.

Der vorliegenden Erfindung liegt die Aufgabe zugrunde, ein einfach und sicher durchzuführendes Verfahren zur Herstellung von Di- und Trialkylsilanen bereitzustellen, wobei mindestens destens ein Alkylrest verzweigt oder cyclisch ist und 4 Kohlenstoffe aufweist und die Silane noch Chloratome oder Alkoxyreste aufweisen.

Die Erfindung betrifft ein Verfahren zur Herstellung von Di- und Trialkylsilanen der allgemeinen Formel (I)

RₐR¹R² _{b}SiX_{c} (I),

bei dem
Mono- und Dialkylsilane der allgemeinen Formel (II)

R¹R² _{b}SiHₐX_{c} (II),

mit Alkenen A mit mindestens 4 Kohlenstoffatomen, welche gegebenenfalls mit Fluor-, Chlor-, Bromatomen oder Cyanogruppen substituiert sind,
in Gegenwart von Übergangsmetallkatalysator und
Kohlenwasserstoff als Aktivator, der mindestens eine funktionelle Gruppe aufweist, die ausgewählt wird aus Aldehyd-, Keto- und Epoxygruppe oder Halogenatomen,
umgesetzt werden,
wobei in den vorstehenden allgemeinen Formeln (I) und (II)
- **R**: gegebenenfalls mit Fluor-, Chlor-, Bromatomen oder Cyanogruppen substituierte verzweigte oder cyclische Kohlenwasserstoffreste mit mindestens 4 Kohlenstoffatomen,
- **R**^{**1**}: gegebenenfalls mit Fluor-, Chlor-, Bromatomen oder Cyanogruppen substituierte Alkylreste mit mindestens 2 Kohlenstoffatomen,
- **R**^{**2**}: gegebenenfalls mit Fluor-, Chlor-, Bromatomen oder Cyanogruppen substituierte Kohlenwasserstoffreste mit mindestens 2 Kohlenstoffatomen,
- **X**: Fluor-, Chlor-, Bromatome oder gegebenenfalls mit Fluor-, Chlor-, Bromatomen oder Cyanogruppen substituierte Alkoxyreste mit 1 bis 18 Kohlenstoffatomen,
- **a**: die Werte 1 oder 2,
- **b**: die Werte 0 oder 1 und
- **c**: die Werte 1 oder 2
bedeuten.

In den vorstehenden allgemeinen Formeln (I) und (II) beträgt die Summe aus a, b und c den Wert 3.

Die vorstehende Umsetzung ist besonders wichtig für die Addition von Alkenen A, welche sterisch anspruchsvoll, nämlich verzweigt oder cyclisch sind. Aber auch lineare Alkene ab 5 Kohlenstoffatome werden ohne Aktivator schlecht addiert. Insbesondere werden erfindungsgemäß Alkene bis 18 Kohlenstoffatome besonders leicht addiert. Die Alkene A können eine oder auch mehrere ungesättige C=C-Bindungen im Molekül haben.

Beispiele für die sterisch anspruchsvollen Alkene A sind Cyclopenten, Cyclohexen, Cyclobuten, Cycloocten, Cyclopentadien, Norbornen (Bicyclohepten), Cyclooctadien, Cyclohexadien, 3-Methylcyclopenten, 3-Methylcyclopentadien, Isobuten, 2,3-Dimethyl-1-buten, 2,3-Dimethyl-2-buten, 3,3-Dimethylbuten, 2,4,4-Trimethyl-1-penten (Diisobutylen) oder 4-Methylen-2,2,6,6-Tetramethylheptan(Triisobutylen).

Der Rest **R** entsteht durch Addition des Alkens A an die Si-H-Gruppe im Silan der allgemeinen Formel (II).

Der Rest **R**^{**1**} weist vorzugsweise höchstens 18 Kohlenstoffatome auf. Bevorzugte Beispiele für die Alkylreste **R**^{**1**} sind der Ethyl-, n-Propyl-, iso-Propyl-, n-Butyl-, iso-Butyl-, sec.-Butyl-, tert.-Butyl-, n-Pentyl-, iso-Pentyl-, neo-Pentyl-, tert.-Pentylrest; Hexylreste, wie der n-Hexyl-, 2,3-Dimethylbutyl-, 3,3-Dimethylbutylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptyl-, Cyclooctyl-, Norbornylreste und Methylcyclohexylreste.

Beispiele für substituierte Reste **R**^{**1**} sind Cyanoalkylreste, wie der β-Cyanoethylrest, und halogenierte Alkylreste wie der 3,3,3-Trifluor-n-propylrest, der 2,2,2,2',2',2'-Hexafluorisopropylrest und der Heptafluorisopropylrest.

Der Rest **R**^{**2**} weist vorzugsweise höchstens 18 Kohlenstoffatome auf. Bevorzugte Beispiele für die Kohlenwasserstoffreste **R**^{**2**} sind die für **R**^{**1**} angegebenen Alkyl- und Alkenylreste, sowie Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Bevorzugte Beispiele für substituierte Reste **R**^{**2**} sind die für **R**^{**1**} angegebenen substituierten Alkyl- und Alkenylreste, sowie Halogenarylreste, wie der o-, m-, und p-Chlorphenylrest.

Bevorzugt als Halogenatom **X** ist das Chloratom. Bevorzugt als **X** sind gegebenenfalls mit Fluor-, Chlor-, Bromatomen oder Cyanogruppen substituierte Alkoxyreste mit 1 bis 6 Kohlenstoffatomen, wie der Methoxy-, Ethoxy-, n-Propoxy-, Isopropoxy-, n- Butoxy-, iso-Butoxy-, sec.-Butoxy-, tert.-Butoxyrest, Pentyloxyreste, wie der n-Pentyloxyrest und Hexyloxyreste, wie der n-Hexyloxyrest. Die Methoxy- und Ethoxyreste sind besonders bevorzugt. Bevorzugt sind die nicht substituierten Alkoxyreste.

Bevorzugte Aktivatoren weisen höchstens 18, insbesondere 10 Kohlenstoffatome auf. Bevorzugte Beispiele für Aldehyde sind Acetaldehyd, Propionaldehyd, n-Butyraldehyd und Benzaldehyd.

Bevorzugte Beispiele für Ketone sind Aceton, Methylethylketon, Diethylketon, Methylisopropylketon, Methylbutylketon, Acetylaceton, Ethylbutylketon, Cyclopentanon und Cyclohexanon. Besonders bevorzugt sind methylsubstituierte Ketone, wie Aceton und Acetylaceton und cyclische Ketone, wie Cyclopentanon und Cyclohexanon.

Bevorzugte Beispiele für Epoxyverbindungen sind die Oxide von Propen, Buten, Cyclopenten und Cyclohexen.

Von den halogenierten Kohlenwasserstoffen werden insbesondere bei der Addition von Chlorsilanen chlorierte Kohlenwasserstoffe bevorzugt. Bevorzugte Beispiele sind CCl₄, CHCl₃, CH₂Cl₂, CH₃Cl, Ethylchlorid, n-Propylchlorid, Isopropylchlorid, sec.-Butylchlorid, Isobutylchlorid, tert.-Butylchlorid, Thexylchlorid, Cyclopentylchlorid, Cyclohexylchlorid, Allylchlorid und Benzylchlorid.

Besonders bevorzugt neben Aceton werden sekundäre und tertiäre Chlorkohlenwasserstoffe, insbesondere Isopropylchlorid, Cyclopentylchlorid und tert.-Butylchlorid.

Die aufzuwendende Menge an Aktivatoren beträgt vorzugsweise 0,1 - 10 Gew.-%, insbesondere 0,3 % - 5 Gew. % des Gesamtansatzes.

Als Übergangsmetallkatalysatoren sind im Prinzip die gängigen Hydrosilylierungskatalysatoren verwendbar. Besonders geeignet sind die Elemente und Verbindungen des Rhodiums und insbesondere des Platins. Bevorzugte Rhodium-Komplexe sind RhCl₃/PPh₃-Überschuß, ClRh(PPh₃)₃ (Wilkinson Katalysator) und HRh(CO)(PPh₃)₂.

Die Platin-Katalysatoren sind z.B. Lösungen von Hexachloroplatinsäure oder H₂PtCl₆ · 6 H₂O in Alkoholen wie Isopropanol (Speier Katalysator), Olefin-Komplexe wie der KarstedtKatalysator (Pt(ViMe₂SiOSiMe₂Vi)₃) oder Phosphin-Komplexe wie Cl₂Pt(PPh₃)₂. Platin kann auch auf festen Trägermaterialien wie Aktivkohle, Aluminiumoxid oder Kieselgel abgeschieden sein. Der bevorzugte Hydrosilylierungskatalysator ist Hexachloroplatinsäure/Isopropanol bzw. Verdünnungen davon, z.B. in Cyclopenten oder in inerten Lösungsmitteln, wie Kohlenwasserstoffen.

Übergangsmetallkatalysatoren werden vorzugsweise in einer Konzentration von 10⁻⁶ - 10⁻² Mol, insbesondere 10⁻⁵ - 10⁻³ Mol, Katalysator pro Mol Silan der allgemeinen Formel (I) oder umgerechnet 2 - 300 mg Platin pro Mol Silan der allgemeinen Formel (I) eingesetzt. Aus wirtschaftlichen Gründen wird eine Katalysatormenge von 10 - 100 mg Pt/Mol Silan besonders bevorzugt. Davon kann je nach Temperaturführung eine erhebliche Menge durch Rückführung der löslichen Pt-Anteile nach der Entfernung der Produkte, z.B. über eine Kurzweg-Destillation, wiederverwendet werden.

Die Reaktionstemperatur kann in einem sehr weiten Bereich variiert werden. Das Optimum hängt dabei in 1. Linie von den Reaktanden, insbesondere vom Alken A und der Katalysatorkonzentration ab. Bei entsprechender Aktivierung z.B. mit Aceton kann die Reaktion bereits bei Raumtemperatur anspringen und vollständig ablaufen. Vorzugsweise beträgt die Temperatur 30 bis 190°C, insbesondere 70 bis 150°C, da dann die Gefahr der Akkumulation von Reaktionsenergie und der Zersetzung von Katalysator bzw. des Erreichen des Zündpunkts der Reaktionsmischung weitgehend vermieden wird.

Vorzugsweise werden pro Mol der Mono- und Dialkylsilane der allgemeinen Formel (II) etwas mehr als 1 Mol Alken A eingesetzt. Vorzugsweise wird ein geringer Überschuß an Alken A von mindestens 2 %, insbesondere 1,05 - 1,5 Mol, vorzugsweise 1,1 - 1,3 Mol, pro Mol Silan der allgemeinen Formel (II) eingesetzt.

Da die Reaktion insgesamt stark exotherm ist, empfiehlt es sich, im batch-Betrieb mindestens eine Komponente während der Reaktion kontinuierlich zu dosieren und so die Innentemperatur nahezu konstant zu halten.

Zur Herstellung der Mono- und Dialkylsilane der allgemeinen Formel (II) werden vorzugsweise Silane der allgemeinen Formel (III)

R² _{b}SiH_{d}X_{c} (III),

mit Alkenen B mit mindestens 2 Kohlenstoffatomen, welche gegebenenfalls mit Fluor-, Chlor-, Bromatomen oder Cyanogruppen substituiert sind,
in Gegenwart von Übergangsmetallkatalysator umgesetzt, wobei
- **d**: die Werte 2 oder 3 bedeuten und
- **R**^{**2**}**,**: **X, b** und **c** die vorstehenden Bedeutungen aufweisen.

In einer bevorzugten Ausführungsform werden die Mono- und Dialkylsilane der allgemeinen Formel (II) im selben Reaktor hergestellt, in dem das erfindungsgemäße Verfahren zur Herstellung der Di- und Trialkylsilane der allgemeinen Formel (I) durchgeführt wird (Eintopfreaktion). Die Mono- und Dialkylsilane der allgemeinen Formel (II) werden dabei vorzugsweise nicht isoliert sondern direkt mit Alken A umgesetzt.

Die Silane der allgemeinen Formel (II) können aber auch durch metallorganische Alkylierung von Chlor- oder Alkoxysilanen der allgemeinen Formel

X_{c+1}SiH_{d}

oder Hydridübertragung auf Alkylsilane der allgemeinen Formel

R² _{b}SiX_{c+1}

hergestellt werden, wobei **R**^{**2**}**, x, b, c** und **d** die vorstehenden Bedeutungen aufweisen.

Bei der Eintopfreaktion kann bei der Herstellung der Di- und Trialkylsilane der allgemeinen Formel (I) Silan der allgemeinen Formel (III) zur vorgelegten nahezu äquimolaren Menge an Alken A, die den größten Teil des Übergangsmetall-Katalysators bereits gelöst enthält, in vorzugsweise 15 bis 60 min kontinuierlich zudosiert werden.

Man kann aber auch umgekehrt vorgehen und Alken A oder zuerst Alken B und dann Alken A zum vorgelegten Silan der allgemeinen Formel (III) dosieren. Nach der Zugabe von Aktivator und kurzer Aktivierungsphase wird die deutlich langsamere erfindungsgemäße Addition von Alken A durchgeführt. Die Herstellung der Di- und Trialkylsilane der allgemeinen Formel (I) kann, z.B. bei Druckkessel-Rührwerken, wiederum gut über die Innentemperatur bzw. die Wärmebilanz oder einfach über den jeweiligen Innendruck gesteuert werden. Der in der Gasphase über der Reaktionslösung meßbare Druck entspricht dabei weitgehend der Summe der temperaturbedingten Partialdrucke der noch nicht abreagierten Edukte. Bei besonders reaktiven Aktivatoren, wie z.B. Methylketonen oder Epoxiden, die dementsprechend kurze Halbwertszeiten haben, kann es von Vorteil sein, sie portionsweise und, zum Teil erst während der Herstellung der Di- und Trialkylsilane der allgemeinen Formel (I), nachzudosieren.

Über die dem Verbrauch entsprechende Dosierung mindestens einer Reaktionskomponente kann man z.B. über eine Druckanzeige den Prozeß gut steuern und Emissionen sowie insbesondere gefährliche Betriebszustände von vornherein vermeiden. Die gezielte Zugabe von Aktivatoren verkürzt die Induktionsphase der Herstellung der Di- und Trialkylsilane der allgemeinen Formel (I) und führt insgesamt zu einer deutlichen Steigerung der Raum-Zeit-Ausbeute. Da die Reaktion insgesamt stark exotherm ist, wird im batch-Betrieb vorzugsweise mindestens eine Komponente während der Reaktion kontinuierlich zudosiert und so die Innentemperatur nahezu konstant gehalten.

Dies ermöglicht auch vollkontinuierliche Additionsverfahren mit relativ kurzen Verweilzeiten von unter 30 Minuten, welche besonders sicher und wirtschaftlich sind.

Batch-Verfahren werden vorzugsweise im Autoklaven durchgeführt. Kontinuierliche Verfahren werden durch separate Dosierung der Edukte, z.B. in einen Rohr- oder Loopreaktor, der über ein Wärmeträgeröl thermostatisierbar ist, durchgeführt. Am Ende des kontinuierlichen Reaktors wird die nahezu vollständig umgesetzte Mischung beispielsweise über ein Überström- oder Druckhalte-Ventil geleitet und in einem Stahltank gesammelt.

Lösungsmittel sind nicht notwendig zur Herstellung der Di- und Trialkylsilane der allgemeinen Formel (I), können jedoch anwesend sein. Insbesondere bei einer dosierkontrollierten Reaktionsführung kann auf die Verdünnung durch inerte Solventien, wie es in vergleichbaren Hydrosilylierungen aus cherheitsgründen, z.B. zur Wärmeabführung empfohlen wird, verzichtet werden. Geringe Zusätze an polaren Lösungsmitteln, wie THF oder Glycolether können bei der Dosierung des Platinkatalysators in sehr unpolare Medien von Vorteil sein.

In den nachfolgenden Beispielen sind, falls jeweils nicht anders angegeben,
a) alle Mengenangaben auf das Gewicht bezogen;
b) alle Drücke 0,10 MPa (abs.);
c) alle Temperaturen 20° C .

### Beispiele

Das zur Katalysatorherstellung verwendete Platinsäure-Konzentrat war eine 5 %ige Lösung von H₂PtCl₆ · 6 H₂O in Isopropanol mit 2 Gew.-% Pt-Gehalt.

### Analytik:

Der Reaktionsumsatz wurde über GC verfolgt. Abgefüllte GC-Proben wurden über Trockeneis gelagert, um Nachreaktionen zu vermeiden.

### I. Batch-Betrieb:

Die nachfolgend exemplarisch aufgeführten Untersuchungen wurden in einem 1-Liter Stahlrührgefäß mit Doppelmantel (zur Thermostatisierung über Ölkreislauf) und Ablaß, der Firma Büchi (Laborrührautoklav BEP 280 Typ IV) bzw. in einer entsprechenden 250 l-Technikumsanlage (= pilot plant) durchgeführt. Diese Druckgefäße waren jeweils mit Aceton gereinigt, evakuiert und mit reinem Stickstoff luftfrei gespült bzw. inertisiert. Die Dosierung in diese mit Meßstellen für Innentemperatur und -druck ausgestatteten (Nieder)druckrührwerke erfolgte jeweils über Tauchrohre, d.h. in die vorgelegte und gerührte Flüssigphase.

### Beispiele 1 - 7

Herstellung von Dicyclopentyldichlorsilan durch Umsetzung von Cyclopenten mit Dichlorsilan

### Beispiel 1

In einem 1 l-Rührautoklav werden zunächst 236 g (3,4 Mol) Cyclopenten mit 5 g Platinsäure-Isopropanol-Lösung unter Rühren vorgelegt und auf ca. 70 °C aufgeheizt. Bei dieser Temperatur beginnt man mit der Dosierung von insgesamt 305 g (3 Mol) Dichlorsilan, wobei die ersten 30 g rel. schnell zugesetzt werden. Nach dem Anspringen der Reaktion wird die Thermostattemperatur erniedrigt, sodaß der Rest an H₂SiCl₂ bei einer Innentemperatur von ca. 75 °C und einem Innendruck von 6 - max. 9 bar in 30 min dosiert werden kann. Nach einer ebenso langen Nachrührzeit bei 80 °C ist das Dichlorsilan nahezu vollständig umgesetzt und der Druck konstant. Die GC-Analyse an diesem Punkt zeigt 78,5 % Cyclopentyldichlorsilan (= CpSiHCl₂), 4,3 % Cyclopentylchlorsilan (= CpSiH₂Cl), 0,8 % Cyclopentyltrichlorsilan (= CpSiCl₃) und 6,3 % an überschüssigem Cyclopenten, sowie einige Peaks < 1 %, insbesondere bei rel. niedrigen Retentionszeiten.

Durch Zugabe von 11 g Aceton und Erwärmen auf 140 °C wird die Reaktionsmischung aktiviert. Der Endpunkt dieser Aktivierungsphase ist am Absinken des Druckes oder an der beginnenden Erwärmung infolge der Addition des restlichen Cycloolefins zu erkennen. Im GC ist nun kein CpSiH₂Cl mehr enthalten, sondern bereits bis zu 3,5 % Dicyclopentyldichlorsilan (= Cp₂SiCl₂, neben 1,5 % Cp₂SiHCl, 74,1 % CpSiHCl₂ und 1,6 % CpSiCl₃).

Nach dieser Aktivierung kann die 2. Stufe durch Dosierung von 201 g Cyclopenten in den bei ca. 140 °C gehalten Rührkessel ebenfalls kontrolliert durchgeführt werden. Die sierungsgeschwindigkeit und damit die Reaktionswärme werden wie in der 1. Stufe über den Überdruck gesteuert. Bei Drücken < 10 bar ist dazu knapp 1 h notwendig. Bei nachlassender Aktivität oder längerer thermischer Belastung des Katalysators werden nochmals 1 % Aceton zugegeben. Nach einer gut 1 h dauernden Nachrührphase, in der der Überdruck allmählich bis auf 3 bar/140 °C abfällt, ist die Umsetzung beendet. Der auf Raumtemperatur abgekühlte Ansatz zeigt keinen Restdruck mehr. Die GC-Analyse der über das Bodenventil abgefüllten 754 g an Rohprodukt weist 83,5 % Dicyclopentyldichlorsilan und 1,9 % Dicyclopentylmonochlorsilan aus. Es enthält nur noch 1,2 % Monozwischenstufe CpSiHCl₂ neben 1,8 % CpSiCl₃, 1,9 % SiCl₄ und 3,2 % Cyclopenten (Überschuß), sowie wenige rel. tiefsiedende Nebenprodukte (jeweils < 1 Flächen-%-Gehalt).

### Beispiel 2

Wie in Beispiel 1 werden 235 g Cyclopenten im 1 l-Rührkessel vorgelegt und mit 4 g Isopropanol-Katalysatorlösung versetzt. Nun wird bei Raumtemperatur mit der Dosierung von insgesamt 314 g (3 Mol) Dichlorsilan begonnen, das bereits 3 % Cyclopentylchlorid enthält. Nachdem ca. 1/5 der "aktivierten" Mischung rel. schnell in die intensiv gerührte Vorlage gepumpt ist, wird auf 130 °C erwärmt und die restlichen 4/5 H₂SiCl₂ in 40 min so zugegeben, daß diese Innentemperatur auf ±5° konstant bzw. der Überdruck < 10 bar bleibt. In der Nachrührphase bei 130 - 140 °C zeigt ein innerhalb der 1 Stunde einsetzender deutlicher Druckabfall bis < 4 bar nicht nur das Ende der Monostufe, sondern bereits den Beginn der 2. Stufe an. Die GC-Analyse an diesem Punkt weist 83,5 % CpSiHCl₂, neben 3,1 % Cyclopenten, 0,9 % CpSiCl₃, 3,1 % Cp₂SiHCl und 5,3 % Cp₂SiCl₂, aber kein CpSiH₂Cl mehr auf.

Die 2. Stufe wird sofort anschließend, wiederum durch kontrollierte Dosierung von 198 g Cyclopenten, in 1 h bei 130 - 140 °C und Nachrühren bei 140 - 150 °C vervollständigt. Für die nachfolgende Alkoxylierung werden hier 740 g eines 86 %igen Dicyclopentyldichlorsilans abgefüllt. Es enthält nach GC noch 2,5 % Cp₂SiHCl, 1,9 % CpSiCl₃, 1,3 % übriges CpSiHCl₂ und 2,3 % Cyclopenten als größere Nebenbestandteile.

### Beispiel 3

Man legt 3,3 Mol (230 g) Cyclopenten + 6 g Katalysatorlösung wie in Beispiel 1 bei 70 °C unter intensiver Durchmischung vor und beginnt relativ schnell mit der Dosierung von Dichlorsilan. Nach Zugabe von ca. 100 g H₂SiCl₂ in 10 min werden bei 80 °C zunächst 5 g tert.-Butylchlorid zugesetzt. Man erwärmt das Reaktionsgemisch innerhalb von 30 min auf 130 °C und dosiert nun in der gleichen Zeit den Rest von insgesamt 304 g (3 Mol) H₂SiCl₂ in die auf diese Temperatur thermostatisierte, aktivierte Vorlage. Nach weiteren 20 min Rühren bei 130 - 140 °C ist die Monostufe beendet (81,6 % CpSiHCl₂; nur noch 2,7 % Cyclopenten, 0,6 % CpSiCl₃ und 2,1 % SiCl₄; bereits 4,5 % Cp₂SiCl₂ und 2,3 % Cp₂SiHCl) und der Innendruck im Reaktor auf 6 bar abgefallen.

Innerhalb von ca. 40 min werden nun insgesamt 204 g (2,9 Mol, 97 %ig) Cyclopenten versetzt mit 1 % tert-Butylchlorid so zudosiert, daß die Reaktionstemperatur bei 130 - 140 °C bleibt. Nach etwa der gleichen Zeit Nachrühren ist der Überdruck im Kessel auf 3 bar abgefallen. Man rührt weiter bis Raumtemperatur und kann problemlos 732 g rohes Dicylopentyldichlorsilan (83,7 %ig nach GC; enthält noch 2,8 % Cp₂SiHCl, 2,6 % CpSiCl₃, 3,2 % SiCl₄ und 2,6 % übriges Cyclopenten) abfüllen.

### Beispiel 4: Vorlage von Dichlorsilan, Dosierung von Cyclopenten

In den mit 7 g Pt-Isopropanol-Lösung (= 140 mg Pt) und 15 g Cyclopenten verschlossenen Rührautoklav werden zunächst 253 g (2,5 Mol) Dichlorsilan eingelegt und unter Rühren auf 70°C/ 7 bar erwärmt. Nun dosiert man innerhalb von 40 min zunächst nur 184 g (2,6 Mol) Cyclopenten mit 2 % Cyclopentylchlorid zu und rührt ebenso lange bei 70 - 80°C nach. Dabei fällt der Innendruck von 9 bar allmählich auf unter 3 bar ab. Nach dem GC ist Cyclopenten weitestgehend umgesetzt. Es sind 7,1 % Cyclopentylmonochlorsilan CpSiH₂Cl neben 78,9 % CpSiHCl₂ und einigen Tiefsiedern entstanden. Die Dihydrogensilane und damit auch die Katalysatorhemmung für die 2. Stufe werden durch Nachrühren des Ansatzes bei 80 bis 140°C in ca. 2 h gänzlich abgebaut.

Durch kontrollierte Dosierung von weiteren 180 g (2,6 Mol) Cyclopenten in 1 h bei 140 ±5°C und 2 h Nachreaktion erhält man daraus ein ca. 71 %iges Dicyclopentyldichlorsilan. Es enthält nach dem GC noch 6,2 % unumgesetzte Monostufe, d.h. CpSiHCl₂ und 5,3 % Cyclopenten, neben 2,1 % Cp₂SiHCl, 4,6 % CpSiCl₃ und 3,5 % SiCl₄, sowie einige kleinere, nicht zugeordnete Peaks.

### Beispiel 5: Pilot Plant

In einem 250 l Druckrührkessel mit Sicherheitsventil (auf 20 bar eingestellt) werden 58 kg (827 Mol) Cyclopenten und 0,5 kg Platinsäure-Isopropanol-Lösung unter Rühren (130 U/min) vorgelegt. Man dosiert bei Raumtemperatur beginnend insgesamt 75 kg (740 Mol) H₂SiCl₂ in knapp 1 h in das Druckgefäß. Dabei werden die ersten 15 kg zunächst schnell dosiert und dann erst aufgeheizt auf 70°C. Der Rest an Dichlorsilan wird bei leichter Kühlung (Kühlschlange im Rührkessel) zugegeben, so daß sich eine Innentemperatur zwischen 70 - 80°C einstellt. Anschließend dosiert man nochmals 0,5 kg Katalysator-Lösung verdünnt mit 2 kg Isopropylchlorid (=2-Chlorpropan) in ca. derselben Zeit zur vorliegenden Mischung, wobei die Reaktionstemperatur allmählich auf 140°C angehoben wird. Der am Ende deutlich beobachtbare Druckabfall im Reaktor bis unter 4 bar/140°C zeigt den weitgehenden Umsatz von Cyclopenten und schließlich den Beginn der 2. Stufe (vgl. Beispiel 1) an.

In der nächsten Stunde werden weitere 54 kg Cyclopenten mit 1 kg Isopropylchlorid vermischt bei 140 - 150°C / max. 12 bar zudosiert. Innerhalb der ca. 2 h dauernden Nachrührphase fällt der Überdruck allmählich wieder auf Werte < 3 bar / 140°C ab. Der bis Raumtemperatur gerührte, drucklose Ansatz wird schließlich über das Bodenventil in Blechfässer abgefüllt. Man erhält 188 kg Rohprodukt mit einem Gehalt von 80,3 % an Dicyclopentyldichlorsilan. Nach dem GC sind außerdem noch 2,1 % Cp₂SiHCl, 2,7 % CpSiCl₃, 2,8 % übriges CpSiHCl₂ bzw. 5,1 % Cyclopenten und 3,2 % SiCl₄ als größere Nebenbestandteile enthalten.

### Beispiel 6: Pilot Plant

Wie in Beispiel 5 werden 58 kg Cyclopenten + 0,7 kg Katalysator-Lösung im gleichen 250 l-Kessel vorgelegt und nun 71 kg (700 Mol) H₂SiCl₂ in 40 min bei 120 - 130° zudosiert. Durch langsame Zugabe von 3 l Cyclopentanon und Nachrühren bei dieser Temperatur ist die 1. Stufe nach 2 h beendet und der Überdruck auf 2 bar abgefallen.

Innerhalb von 1 h dosiert man nun für die 2. Stufe 48 kg Cyclopenten mit 2 % Cyclopentanon als Aktivator hinzu und rührt weitere 2 h bei 130 - 140°C nach. Dabei fällt der Innendruck wieder kontinuierlich auf ca. 2 bar/130°C ab. Der abgekühlte drucklose Ansatz wird anschließend abgefüllt. Man erhält 179 kg Produkt mit 79,3 % Dicyclopentyldichlorsilan nach dem GC (daneben noch 3,5 % Cyclopenten bzw. 0,8 % CpSiHCl₂; 2,9 % Cp₂SiHCl, 5,2 % CpSiCl₃ und 4,2 % SiCl₄).

### Beispiel 7: Vergleichsversuche ohne Dosierung

### a) ohne Zugabe von Aktivatoren (nicht erfindungsgemäß)

Werden reines Dichlorsilan und die jeweiligen Olefine in den vorher in den Beispielen 1 - 6 ausgeführten Gewichtsverhältnissen, d.h. im Molverhältnis von ca. 1 : 2, zusammen mit dem Platinkatalysator in einem Niederdruckreaktor (Sicherheitsventil ab 20 bar, siehe Beispiel 5) gemischt, ist zunächst kaum Umsetzung zu beobachten. Beim langsamen Erwärmen springt die Reaktion aber oberhalb von ca. 60°C meist sehr heftig an und kann bei mäßiger Wärmeabführung bzw. bei größeren Ansätzen aufgrund der hohen molaren Enthalpie (110 kJ/H-Si) schnell Innentemperaturen bis über 180°C erreichen. Dies entspricht einem Dampfdruck der zu diesem Zeitpunkt noch größtenteils vorliegenden Edukte von über 20 bar. Demzufolge riskiert man bei den komplett vorliegenden Mischungen stets ein Durchgehen des Ansatzes bis hin zur Freisetzung von aggressiven giftigen Stoffen. Dies wurde auch in mehreren Laborversuchen, insbesondere bei der Hydrosilylierung von Isobuten und Norbornen beobachtet. Eine durchgehende Reaktion führt dabei zu unerwünschten Nebenreaktionen wie z.B. der Polymerisation des Olefins, zumindest aber zu einer Schädigung des Katalysatorsystems.

Werden im konkreten Fall die in Beispiel 6 (bzw. Beispiel 5) insgesamt umgesetzten Mengen an Cyclopenten + H₂SiCl₂ zusammen mit dem Katalysator im 250 l-Rührkessel erwärmt, beobachtet man ab 60 - 80°C einen sehr exothermen Start der 1. Stufe mit Druckspitzen bis über 20 bar (= Hot spots > 180°C). Während die Flüssigkeitstemperatur relativ schnell wieder auf die des Ölthermostaten von 130°C zurückgeht, fällt der Reaktorüberdruck exponentiell innerhalb von 2 h auf 11 bar ab und bleibt auch nach mehr als 8 h Rührzeit bei dieser Temperatur nahezu konstant. Die GC-Analyse weist dann zwar 37,8 % CpSiHCl₂ neben 2,9 % Cp₂SiHCl, aber auch noch 4,8 % H₂SiCl₂, 3,9 % HSiCl₃, 41,7 % Cyclopenten und insbesondere 5,4 % Cyclopentyldihydrogensilan CpSiH₂Cl aus. Die Konzentration dieser hauptsächlich für die Katalysator-Inhibierung verantwortlichen Dihydrogensilane nimmt im geschlossenen Reaktor, d.h. ohne Aktivierung oder Entfernung von leichflüchtigen Anteilen, auch nach wesentlich längerer Rührzeit kaum ab. Eine nochmalige Zugabe der gleichen Menge an Pt-Katalysator-Konzentrat brachte in einem sehr ähnlichen Versuch auch nur wenig Besserung.

### b) Zugabe von Aktivatoren (erfindungsgemäß)

Durch Zudosierung der Aktivatoren kann nun jene Inhibierung in weniger als 2 h abgebaut und der Katalysator für die 2. Stufe reaktiviert werden.

Kurze Zeit nach Zugabe von 5 kg Aceton zum obigen, bereits 24 h bei 130°C gerührten Ansatz beginnt eine sehr exotherme Reaktion, die das vorliegende Gemisch in ca. 30 min auf über 160°C (Druckspitzen bis > 20 bar) erwärmt. Danach ist ein steiles Absinken des Innendruckes zu beobachten, der nach gut 2 h exponentiell auf < 6 bar/130°C gefallen ist. Man gibt nochmals 1 kg Aceton hinzu und rührt weitere 3 h nach, bis der Überdruck auf ca. 2 bar/130°C abgesunken ist. Nach dem GC sind nun 74,5 % Cp₂SiCl₂ neben 2,6 % Cp₂SiHCl, 5,6 % CpSiCl₃, 3,7 % SiCl₄ und noch 4,8 % Cyclopenten im dunkelgefärbten Rohprodukt enthalten.

Dieser Aufheizversuch zeigt den (re)aktivierenden Effekt nach Zugabe von Aceton. Gleichzeitig ist aber hier auch die wesentlich geringere Prozeßkontrolle sowie die resultierende niedrigere Selektivität der Reaktion gegenüber den entsprechenden dosierkontrollierten Beispielen, z.B. 1 bzw. 5 und 6, zu erkennen.

### Beispiel 8: Umsetzung von Cyclohexen mit Dichlorsilan

Wie im Beispiel 2 werden zunächst 3,4 Mol (280 g) Cyclohexen im 1 l-Rührkessel vorgelegt und mit 12 g Platinsäure-Isopropanol-Konzentrat versetzt. Nun wird bei Raumtemperatur mit der Dosierung von insgesamt 255 g (2,5 Mol) Dichlorsilan begonnen. Nach der schnellen Zugabe von ca. 30 g in die gerührte Vorlage erwärmt man auf 130°C und dosiert innerhalb von 40 min bei 130 - 140 °C den Rest an H₂SiCl₂ zu. Man rührt gut 1 h bei dieser Temperatur nach, bis der Überdruck auf unter 5 bar abgefallen bzw. die 1. Stufe weitgehend abgelaufen ist.

Innerhalb von 30 min werden 5 g Cyclohexenoxid bei 120°C vorsichtig zudosiert und das Gemisch dann leicht erwärmt. Nach kurzer Rührzeit bei 120 - 140°C ist die Aktivierung beendet und die 2. Additionsstufe gerade gestartet (Druckabfall). Nun dosiert man in ca. 1 h bei 130 - 140°C weitere 199 g (2,4 Mol) Cyclohexen in die reaktivierte Vorlage und rührt 3 h bei dieser Temperatur nach, bis der Druckabfall beendet ist.

Durch Zugabe von 2 g Aceton zur 2. Dosierung wird die Umsetzung deutlich beschleunigt, bzw. die Reaktionszeit mehr als halbiert.

Man füllt über das Bodenventil 736 g Rohprodukt mit 79,6 % Gehalt an Dicyclohexyldichlorsilan ab. Daneben sind nach dem GC noch 3,3 % Dicyclohexylmonochlorsilan, 2,8 % cyclohexyltrichlorsilan, 1,9 % Cyclohexan und 8,2 % überschüssiges Cyclohexen als größere Nebenbestandteile enthalten.

### Umsetzungen von Isobuten mit Dichlorsilan

### Beispiel 9:

Im 1 l-Laborrührautoklav werden zunächst 314 g (3 Mol) Dichlorsilan und 5 g Platinsäure-Lsg. vorgelegt. Bei Raumtemperatur beginnend dosiert man zunächst nur 209 g (3,7 Mol) Isobuten innerhalb von 40 min über ein Tauchrohr in die gerührte Vorlage. Nachdem das 1. Viertel davon relativ schnell zugegeben ist, wird erwärmt und der Rest so langsam dosiert, daß die Innentemperatur bei 70 - 80°C und der Druck unter 9 bar bleibt. Nach weiteren 20 min Rühren bis 90°C gibt man 9 g tert.-Butylchlorid zu und erwärmt die Mischung langsam auf 115 °C. Innerhalb von 2 h bei dieser Temperatur ist die Monoaddition beendet und die als Nebenprodukt anfallende Dihydrogen-Zwischenstufe entfernt. Die GC-Analyse weist 75,6 % Isobutyldichlorsilan neben 6,7 % Isobutyltrichlorsilan, 2,1 % Diisobutyldichlorsilan, 2,7 % Diisobutylmonochlorsilan, 3,9 % SiCl₄ und einigen tiefsiedenden Nebenprodukten aus.

Die 2. Stufe wird nun durch Dosierung von weiteren 170 g Isobuten in 1 h bei 110 - 120°C kontrolliert. Nach Zugabe von nochmals 4 g tert.-Butylchlorid rührt man ca. 2 h bei 120 - 140° weiter. Der abgekühlte Ansatz hat noch einen geringen Restdruck, der in eine Kühlfalle (-20°C) kondensiert und entsorgt wird. Das abgefüllte Rohprodukt (665 g) enthält nach dem GC 75,6 % Diisobutyldichlorsilan, neben 7,3 % Isobutyltrichlorsilan, 2,8 % Diisobutylmonochlorsilan, 3,8 % SiCl₄ und einigen kleineren Nebenprodukten mit niedrigeren Retentionszeiten.

### Beispiel 10: Dosierung von Isobuten zusammen mit H₂SiCl₂

Zunächst wird eine Mischung von Dichlorsilan und Isobuten im Molverhältnis 1:1,2 hergestellt, in dem man zuerst 238 g (4,2 Mol) Isobuten in das gekühlte, rührbare Vorratsgefäß einkondensiert, dann 354 g (3,5 Mol) H₂SiCl₂ zudosiert und mit reinem Stickstoff einen Vordruck von ca. 15 bar einstellt. Im 1 1-Laborrührautoklav werden 4 g Isopropanol-Platin-Lösung mit 40 g Toluol und 3 g tert.-Butylchlorid unter Rühren vorgelegt. Bei Raumtemperatur beginnt man mit der Zugabe der vorbereiteten Isobuten/H₂SiCl₂-Mischung, die aus dem gerührten Vorratsgefäß über ein Tauchrohr und eine Schlauchverbindung aus Edelstahl als Flüssigkeit dosiert wird. Nachdem ca. 50 g Gemisch zugesetzt sind, wird die katalysatorhaltige Vorlage erwärmt. Innerhalb von 1 h werden nun weitere 450 g (insgesamt ca. 3 Mol Silan) so zudosiert, daß die Rekationstemperatur zwischen 80 und 90°C bleibt. 30 min später gibt man 6 g tert.-Butylchlorid hinzu und erwärmt die Reaktionsmischung innerhalb von 2 h vorsichtig auf 130°C. Die GC-Analyse zu diesem Zeitpunkt zeigt 75,4 % Isobutyldichlorsilan neben 3,2 % Isobutyltrichlorsilan, 2,6 % Diisobutylmonochlorsilan, 7,4 % Toluol und unter anderem bereits 1,3 % Diisobutyldichlorsilan. [Durch Entspannen des abgekühlten Ansatzes kann hier ein > 80 %iges Isobutyldichlorsilan abgezweigt werden, das gut für eine 2. Addition an andere hydrosilylierbare Olefine geeignet ist.]

Die 2. Stufe wird wie in Beispiel 9 durch Zugabe von 175 g Isobuten aktiviert mit 2 % tert.-Butylchlorid in 1 h bei 120 - 130°C kontrolliert. Nach weiteren 2 h Rühren bei dieser Temperatur ist die Umsetzung weitgehend abgeschlossen. Man erhält 693 g Rohproduktlösung mit einem Gehalt an Diisobutyldichlorsilan von 76,3 % nach GC. Daneben sind noch 3,9 % Isobutyltrichlorsilan, 2,3 % Diisobutylmonochlorsilan, 5,8 % Toluol, 2,7 % SiCl₄ und einige unbedeutende Nebenprodukte enthalten.

### II. Normaldruck-Rührwerke

### Beispiel 11: Umsetzung von Cyclopentyldichlorsilan mit Cyclopenten

In einem 1 l-Dreihalskolben mit Magnetrührer werden 403 g ca. 84 %iges Cyclopentyldichlorsilan (Monostufe von Beispiel 2) vorgelegt, unter Rühren auf 90°C erwärmt und mit 3 g Platinsäure-Lösung versetzt. Innerhalb von 2 h tropft man nun insgesamt 149 g Cyclopenten aktiviert mit 3 % Aceton so vorsichtig zu, daß in der gut durchgemischten Vorlage 90 - 100°C aufrecht erhalten werden können. Nach 1 h Nachrühren bei dieser Temperatur ist der Rückfluß weitgehend abgeklungen und die 2. Stufe beendet. Im GC der abgefüllten 548 g Rohprodukt sind 89,3 % Cp₂SiCl₂ neben 2,4 % Cp₂SiHCl, 1,2 % CpSiCl₃ und 3,6 % Cyclopenten als Hauptbestandteile ausgewiesen.

### Beispiel 12: Addition von Ethyldichlorsilan an Cyclohexen

In einem 1 l-DHK werden 25 g Cyclohexen, 5 g Acetylaceton und 4 g Isopropanol-Pt-Lösung unter Rühren vorgelegt. Bei Raumtemperatur beginnend tropft man nun insgesamt 528 g einer äquimolaren Mischung von Cyclohexen und Ethyldichlorsilan (je 2,5 Mol) innerhalb von 90 min in die gut durchmischte Katalysator-Lösung. Dabei werden die ersten 50 g rel. schnell zugesetzt und der Rest erst nachdem die Vorlage auf 82°C erwärmt ist. Nach Zugabe von weiteren 3 g Acetylaceton wird noch 1 h weitergerührt, bis eine Sumpftemperatur von über 100°C erreicht ist. Die GC-Analyse an diesem Punkt zeigt 88,6 % Cyclohexylethyldichlorsilan neben 2,9 % Ethyltrichlorsilan, 1,3 % Cyclohexan und 3,7 % übrigem Cyclohexen als wesentliche Bestandteile.

### III. Kontinuierliche Hydrosilylierung/Rohrreaktor

Durch kontinuierliche Prozeßführung ist bei der Addition von Dichlorsilan an die jeweils gewünschten Olefine insbesondere im großen Maßstab eine maximale Sicherheit und gleichzeitig eine sehr ökonomische Umsetzung zu erreichen. Rohr- bzw. Rohrbündel- oder auch Loop-Reaktoren ermöglichen eine sehr gute Wärmeübertragung sowie gegebenenfalls einen kurzfristigen Abbruch des Prozesses durch Dosierstop.

Das Verfahren wurde im Labor an einem Rohrreaktor entwickelt der im Prinzip aus einer Wicklung eines ca. 23 m langen Edelstahlrohres mit einem Innendurchmesser von 4 mm (Reaktorvolumen 290 ml) besteht, die in einem Ölbad auf die jeweilige Temperatur thermostatisiert wurde. Am Rohrende wird die umgesetzte Reaktionslösung kurz nach dem Ölbad über ein auf 20 bar eingestelltes Überström- oder Druckhalte-Ventil und eine Kühlstrecke in einen 3 l-Stahltank gefördert, der über ein Sicherheitsventil mit einem Wäscher (Kühlwasser) verbunden ist. Die Einspeisung der Ausgangskomponenten wurde mit Dosierpumpen bewerkstelligt, die diese über Tauchrohre aus entsprechenden Stahlvorratsgefäßen als Flüssigkeiten förderten. Dichlorsilan muß dazu in einem Druckgefäß (mit Manometer) vorgelegt werden, welches mit einem N₂-Vordruck von ca. 6 - 15 bar beaufschlagt ist. Um ungleiche Dosierungen zu vermeiden, wurde Dichlorsilan bei den Laborversuchen vorher mit dem Olefin im gewünschten Verhältnis gemischt und mit entsprechendem Vordruck als Lösung in den Reaktor gepumpt.

In den nachfolgenden Beispielen wurden 25 - 40 %ige Lösungen von Dichlorsilan in Cyclopenten verwendet. Dazu legt man in einem gereinigten und N₂-inertisierten 3 l-Druckgefäß mit Magnetrührer zunächst 1200 g Cyclopenten vor und leitet dann bis zu 800 g H₂SiCl₂ aus dem Vorratsfaß in diese Vorlage. Dann wird N₂ aufgepreßt bis ca. 7 bar.

### Beispiel 13: Monoaddition an Cyclopenten in 20 min/80° bzw. 130°C

a) Man beginnt mit der Dosierung von 700 g/h einer 25 %igen Lösung von H₂SiCl₂ in Cyclopenten in den oben beschriebenen auf 130°C thermostatisierten Rohrreaktor. Gleichzeitig dosiert man über eine Feindosierpumpe 29 g/h einer Katalysatorlösung aus 1 Teil Isopropanol-Pt-Konzentrat und 3 Teile Cyclopentylchlorid (Pt-Konzentration der Lösung ist 0,5 %). Daraus ergibt sich eine mittlere Verweilzeit von 20 min bei 130°C. Nachdem bereits über 600 g Reaktionsmischung über die Rohrstrecke dosiert sind, wird eine 1. Zwischenprobe über einen Abzweighahn direkt vor dem Sammelbehälter genommen. Die GC-Analyse zeigt, daß bereits nach 20 min bei 130°C alles H₂SiCl₂ abreagiert ist. Es werden 29,1 % Cyclopentyldichlorsilan ausgewiesen, neben nur 1,1 % CpSiH₂Cl, 1,8 % CpSiCl₃, 0,4 % Cp₂SiHCl, sowie 57 % an überschüssigem Cyclopenten und einige kleinere Nebenprodukte mit relativ kurzen Retentionszeiten.
b) Wenn man dieselben Stoffströme über die auf 80°C temperierte Rohrschlange führt -- d.h. 20 min Verweilzeit bei 80°C -- stellt man ebenfalls bereits einen quantitiven Umsatz des H₂SiCl₂ fest. Man gewinnt nach GC jetzt ein 28,6 %iges Monocyclopentyldichlorsilan, das nur noch 0,5 % Dihydrogenalkylsilan CpSiH₂Cl, 1,6 % CpSiCl₃, 0,5 % Cp₂SiHCl und 2,7 % Cyclopentylchlorid, sowie die üblichen Tiefsieder enthält.

### Beispiel 14: Cyclopentyldichlorsilan in 15 min/140°C

In den auf 140°C temperierten Rohrreaktor werden analog Beispiel 13 nun 980 g/h einer 33 %igen Lösung von Dichlorsilan in Cyclopenten sowie 39 g/h einer Platin-Lösung aus 1 Teil Konzentrat und 2 Teile Cyclopentylchlorid (0,66 %ig an Pt) gepumpt. Nachdem ca. 500 g Rohprodukt im angeschlossenen 3 l-Druckgefäß gesammelt sind, wird wieder eine Zwischenprobe vor diesem Behälter abgefüllt. Die GC-Analyse zeigt, daß H₂SiCl₂ hier bereits nach einer Verweilzeit von ca. 15 min bei 140°C vollständig umgesetzt ist. Man erhält nach dem GC ein Zwischenprodukt mit 38,4 % CpSiHCl₂, sowie 1,2 % CpSiH₂Cl, 2,3 % CpSiCl₃, 2,4 % Cyclopentylchlorid und 47,6 % Cyclopenten als Hauptbestandteile.

### Beispiel 15: Dicyclopentyldichlorsilan im Rohrreaktor

Durch Zugabe von 2 % t-Butylchlorid zur im Sammelbehälter aufgefangenen rohen Monostufe, z.B. von Beispiel 14 wird der Katalysator reaktiviert. Diese Mischung wird sofort anschließend wiederum in den auf 145°C temperierten Rohrreaktor eingespeist. Nach einer mittleren Verweilzeit von ca. 45 min im Ölbad (Dosierung von 342 g/h) sind bereits mehr als 80 % des Monocyclopentyldichlorsilans umgesetzt. Eine Zwischenprobe weist nach dem GC jetzt 58,3 % Cp₂SiCl₂ und 1,3 % Cp₂SiHCl neben 3,7 % CpSiCl₃ und noch 8,6 % übrigem CpSiHCl₂ bzw. 26 % Cyclopenten aus. Dieser Rest an Monostufe wird beim Nachrühren der Reaktionsmischungen des 2. Durchlaufes im 3 l-Sammelgefäß allmählich zur Dicyclopentyl-Stufe umgesetzt. Durch Zugabe von 2 % Aceton, vorzugsweise in einem separaten Rührwerk mit N₂-Bypass, wird diese Nachreaktion beschleunigt bzw. im 1 - 2 h vervollständigt.

Die Zugabe von 2 % t.-Butylchlorid als Reaktivator kann auch direkt bei der 2. Einspeisung in den Rohrreaktor erfolgen. In diesem Fall sind Verweilzeiten von ca. 1 h bei 145 - 150°C notwendig, um zum gleichen Ergebnis wie bei der beschriebenen Vorgehensweise zu kommen.

### Beispiel 16: Vom Rohrreaktor direkt ins Standard-Rührwerk/2. Stufe

Insgesamt 1200 g der nach Beispiel 13 b bei 80°C erhaltenen ca. 29 %igen Monoadditions-Produktmischung werden mit dieser Geschwindigkeit direkt in ein 2 l-Glasrührwerk mit Rückflußkühler und N₂-Bypass dosiert, in dem 4 g Platinsäure-Konzentrat (= 80 mg Pt) verdünnt mit 30 g Cyclopentanon bei anfangs 60°C vorgelegt sind. Die Blasentemperatur wird dabei so geregelt, daß stets ein mäßiger Cyclopenten-Rückfluß aufrechterhalten und die kontinuierlich anfallende Additionswärme durch Wasserkühlung gut abführbar ist. Man rührt gut 2 h unter Erwärmung nach, bis die Innentemperatur nicht mehr steigt. Die GC-Analyse zu diesem Zeitpunkt weist 38,7 % Cp₂SiCl₂ und 1,6 % Cp₂SiHCl neben 4,1 % CpSiCl₃ und noch 3,8 % CpSiHCl₂ bzw. 44,8 % überschüssiges Cyclopenten aus.

## Patentansprüche (Patentansprüche für folgende(n) Vertragsstaat(en): IT, NL)

1. Verfahren zur Herstellung von Di-und Trialkylsilanen der allgemeinen Formel (I)
RₐR¹R² _{b}SiX_{c} (I),
bei dem
Mono- und Dialkylsilane der allgemeinen Formel (II)
R¹R² _{b}SiHₐX_{c} (II),
mit Alkenen A mit mindestens 4 Kohlenstoffatomen, welche gegebenenfalls mit Fluor-, Chlor-, Bromatomen oder Cyanogruppen substituiert sind,
in Gegenwart von Übergangsmetallkatalysator und
Kohlenwasserstoff als Aktivator, der mindestens eine funktionelle Gruppe aufweist, die ausgewählt wird aus Aldehyd-, Keto- und Epoxygruppe und Halogenatomen, umgesetzt werden,
wobei in den vorstehenden allgemeinen Formeln (I) und (II)
**R** gegebenenfalls mit Fluor-, Chlor-, Bromatomen oder Cyanogruppen substituierte verzweigte oder cyclische Kohlenwasserstoffreste mit mindestens 4 Kohlenstoffatomen,
**R**^{**1**} gegebenenfalls mit Fluor-, Chlor-, Bromatomen oder Cyanogruppen substituierte Alkylreste mit mindestens 2 Kohlenstoffatomen,
**R**^{**2**} gegebenenfalls mit Fluor-, Chlor-, Bromatomen oder Cyanogruppen substituierte Kohlenwasserstoffreste mit mindestens zwei Kohlenstoffatomen,
**X** Fluor-, Chlor-, Bromatome oder gegebenenfalls mit Fluor-Chlor-, Bromatomen oder Cyanogruppen substituierte Alkoxyreste mit 1 bis 18 Kohlenstoffatomen,
**a** die Werte 1 oder 2,
**b** die Werte 0 oder 1 und
**c** die Werte 1 oder 2
bedeuten.

2. Verfahren nach Anspruch 1, bei dem die Alkene A verzweigt oder cyclisch sind und bis zu 18 Kohlenstoffatome aufweisen.

3. Verfahren nach Anspruch 1 oder 2, bei dem der Rest **R**^{**1**} höchstens 18 Kohlenstoffatome aufweist.

4. Verfahren nach Anspruch 1 bis 3, bei dem der Rest **R**^{**2**} höchstens 18 Kohlenstoffatome aufweist.

5. Verfahren nach Anspruch 1 bis 4, bei dem der Rest **X** ein Chloratom oder einen gegebenenfalls mit Fluor-, Chlor-, Bromatomen oder Cyanogruppen substituierten Alkoxyrest mit 1 bis 6 Kohlenstoffatomen bedeutet.

6. Verfahren nach Anspruch 1 bis 5, bei dem der Aktivator höchstens 18 Kohlenstoffatome aufweist.

7. Verfahren nach Anspruch 1 bis 6, bei dem die Menge an Aktivator 0,1 - 10 Gew.-% des Gesamtanssatzes beträgt.

8. Verfahren nach Anspruch 1 bis 7, bei dem die eingesetzten Mono- und Dialkylsilane der allgemeinen Formel (II) im selben Reaktor hergestellt werden, in dem das Verfahren zur Herstellung der Di- und Trialkylsilane der allgemeinen Formel (I) durchgeführt wird und wobei Silane der allgemeinen Formel (III)
R² _{b}SiH_{d}X_{c} (III),
mit Alkenen B mit mindestens 2 Kohlenstoffatomen, welche gegebenenfalls mit Fluor-, Chlor-, Bromatomen oder Cyanogruppen substituiert sind,
in Gegenwart von Übergangsmetallkatalysator umgesetzt werden, wobei
**d** die Werte 2 oder 3 bedeuten und
**R**^{**2**}, **X**, **b** und **c** die vorstehenden Bedeutungen aufweisen.

## Patentansprüche (Patentansprüche für folgende(n) Vertragsstaat(en): DE, FR, GB)

1. Verfahren zur Herstellung von Di-und Trialkylsilanen der allgemeinen Formel (I)
RₐR¹R² _{b}SiX_{c} (I),
bei dem
Mono- und Dialkylsilane der allgemeinen Formel (II)
R¹R² _{b}SiHₐX_{c} (II),
mit Alkenen A mit mindestens 4 Kohlenstoffatomen, welche gegebenenfalls mit Fluor-, Chlor-, Bromatomen oder Cyanogruppen substituiert sind,
in Gegenwart von Übergangsmetallkatalysator und
Kohlenwasserstoff als Aktivator, der mindestens eine funktionelle Gruppe aufweist, die ausgewählt wird aus Aldehyd-, Keto- und Epoxygruppe und Halogenatomen, mit Ausnahme von ungesättigten Ketonen der Formeln
R⁵CO(CH₂)ₙCH=CR³R⁴
oder
COCH=CR³(CR³ ₂)ₘ,
in denen
R⁵ Alkylreste mit 1 bis 12 Kohlenstoffatomen,
R³ Wasserstoffatome oder Alkylreste mit 1 bis 4 Kohlenstoffatomen,
R⁴ Wasserstoffatome oder nicht-Aryl einwertige Kohlenwasserstoffreste mit 1 bis 12 Kohlenstoffatomen,
n die Werte 0 bis 4 und
m die Werte 1 bis 17 bedeuten,
umgesetzt werden,
wobei in den vorstehenden allgemeinen Formeln (I) und (II)
**R** gegebenenfalls mit Fluor-, Chlor-, Bromatomen oder Cyanogruppen substituierte verzweigte oder cyclische Kohlenwasserstoffreste mit mindestens 4 Kohlenstoffatomen,
**R**^{**1**} gegebenenfalls mit Fluor-, Chlor-, Bromatomen oder Cyanogruppen substituierte Alkylreste mit mindestens 2 Kohlenstoffatomen,
**R**^{**2**} gegebenenfalls mit Fluor-, Chlor-, Bromatomen oder Cyanogruppen substituierte Kohlenwasserstoffreste mit mindestens zwei Kohlenstoffatomen,
**X** Fluor-, Chlor-, Bromatome oder gegebenenfalls mit Fluor-Chlor-, Bromatomen oder Cyanogruppen substituierte Alkoxyreste mit 1 bis 18 Kohlenstoffatomen,
**a** die Werte 1 oder 2,
**b** die Werte 0 oder 1 und
**c** die Werte 1 oder 2
bedeuten.

2. Verfahren nach Anspruch 1, bei dem die Alkene A verzweigt oder cyclisch sind und bis zu 18 Kohlenstoffatome aufweisen.

3. Verfahren nach Anspruch 1 oder 2, bei dem der Rest **R**^{**1**} höchstens 18 Kohlenstoffatome aufweist.

4. Verfahren nach Anspruch 1 bis 3, bei dem der Rest **R**^{**2**} höchstens 18 Kohlenstoffatome aufweist.

5. Verfahren nach Anspruch 1 bis 4, bei dem der Rest **X** ein Chloratom oder einen gegebenenfalls mit Fluor-, Chlor-, Bromatomen oder Cyanogruppen substituierten Alkoxyrest mit 1 bis 6 Kohlenstoffatomen bedeutet.

6. Verfahren nach Anspruch 1 bis 5, bei dem der Aktivator höchstens 18 Kohlenstoffatome aufweist.

7. Verfahren nach Anspruch 1 bis 6, bei dem die Menge an Aktivator 0,1 - 10 Gew.-% des Gesamtanssatzes beträgt.

8. Verfahren nach Anspruch 1 bis 7, bei dem die eingesetzten Mono- und Dialkylsilane der allgemeinen Formel (II) im selben Reaktor hergestellt werden, in dem das Verfahren zur Herstellung der Di- und Trialkylsilane der allgemeinen Formel (I) durchgeführt wird und wobei Silane der allgemeinen Formel (III)
R² _{b}SiH_{d}X_{c} (III),
mit Alkenen B mit mindestens 2 Kohlenstoffatomen, welche gegebenenfalls mit Fluor-, Chlor-, Bromatomen oder Cyanogruppen substituiert sind,
in Gegenwart von Übergangsmetallkatalysator umgesetzt werden, wobei
**d** die Werte 2 oder 3 bedeuten und
**R**^{**2**}, **X**, **b** und **c** die vorstehenden Bedeutungen aufweisen.

## Claims (Claims for the following Contracting State(s): IT, NL)

1. Process for preparing di- and trialkylsilanes of the general formula (I)
RₐR¹R² _{b}SiX_{c} (I),
which comprises reacting
mono- and dialkylsilanes of the general formula (II)
R¹R² _{b}SiHₐX_{c} (II),
with alkenes A having at least 4 carbon atoms, which alkenes are unsubstituted or substituted by fluorine, chlorine or bromine atoms or cyano groups,
in the presence of a transition metal catalyst and
a hydrocarbon as activator, which hydrocarbon has at least one functional group selected from among aldehyde, keto and epoxy groups or halogen atoms,
where, in the above general formulae (I) and (II),
R is a branched or cyclic hydrocarbon radical having at least 4 carbon atoms, which radical is unsubstituted or substituted by fluorine, chlorine or bromine atoms or cyano groups,
R¹ is an alkyl radical having at least 2 carbon atoms, which radical is unsubstituted or substituted by fluorine, chlorine or bromine atoms or cyano groups,
R² is a hydrocarbon radical having at least two carbon atoms, which radical is unsubstituted or substituted by fluorine, chlorine or bromine atoms or cyano groups,
X is a fluorine, chlorine or bromine atom or an alkoxy radical having from 1 to 18 carbon atoms, which radical is unsubstituted or substituted by fluorine, chlorine or bromine atoms or cyano groups,
a is 1 or 2,
b is 0 or 1 and
c is 1 or 2.

2. Process according to Claim 1, wherein the alkenes A are branched or cyclic and have up to 18 carbon atoms.

3. Process according to Claim 1 or 2, wherein the radical R¹ has at most 18 carbon atoms.

4. Process according to any of Claims 1 to 3, wherein the radical R² has at most 18 carbon atoms.

5. Process according to any of Claims 1 to 4, wherein the radical X is a chlorine atom or an alkoxy radical having from 1 to 6 carbon atoms, which radical is unsubstituted or substituted by fluorine, chlorine or bromine atoms or cyano groups.

6. Process according to any of Claims 1 to 5, wherein the activator has at most 18 carbon atoms.

7. Process according to any of Claims 1 to 6, wherein the amount of activator is 0.1 - 10 % by weight of the total mixture.

8. Process according to any of Claims 1 to 7, wherein the mono- and dialkylsilanes of the general formula (II) which are used are prepared in the same reactor in which the process for preparing the di- and trialkylsilanes of the general formula (I) is carried out and wherein silanes of the general formula (III)
R² _{b}SiH_{d}X_{c} (III),
are reacted with alkenes B having at least 2 carbon atoms, which alkenes are unsubstituted or substituted by fluorine, chlorine or bromine atoms or cyano groups,
in the presence of a transition metal catalyst, where
d is 2 or 3 and
R², X, b and c are as defined above.

## Claims (Claims for the following Contracting State(s): DE, FR, GB)

1. A process for preparing di- and trialkylsilanes of the general formula (I)
RₐR¹R² _{b}SiX_{c} (I),
which comprises reacting
mono- and dialkylsilanes of the general formula (II)
R₁R² _{b}SiHₐX_{c} (II),
with alkenes A having at least 4 carbon atoms, which alkenes are unsubstituted or substituted by fluorine, chlorine or bromine atoms or cyano groups,
in the presence of a transition metal catalyst and
a hydrocarbon as activator, which hydrocarbon has at least one functional group selected from among aldehyde, keto and epoxy groups or halogen atoms, with the exception of unsaturated ketones of the formulae
R⁵CO(CH₂)₁CH=CR³R⁴
or
COCH=CR³ (CR³ ₂)ₘ,
in which
R⁵ is an alkyl radical having 1 to 12 carbon atoms,
R³ is a hydrogen atom or an alkyl radical having 1 to 4 carbon atoms,
R⁴ is a hydrogen atom or a non-aryl monovalent hydrocarbon radical having 1 to 12 carbon atoms,
n is 0 to 4 and
m is 1 to 17,
where, in the above general formulae (I) and (II),
R is a branched or cyclic hydrocarbon radical having at least 4 carbon atoms, which radical is unsubstituted or substituted by fluorine, chlorine or bromine atoms or cyano groups,
R¹ is a hydrocarbon radical having at least 2 carbon atoms, which radical is unsubstituted or substituted by fluorine, chlorine or bromine atoms or cyano groups,
R² is a hydrocarbon radical having at least two carbon atoms, which radical is unsubstituted or substituted by fluorine, chlorine or bromine atoms or cyano groups,
X is a fluorine, chlorine or bromine atom or an alkoxy radical having from 1 to 18 carbon atoms, which radical is unsubstituted or substituted by fluorine, chlorine or bromine atoms or cyano groups,
a is 1 or 2,
b is 0 or 1 and
c is 1 or 2.

2. The process as claimed in claim 1, wherein the alkenes A are branched or cyclic and have up to 18 carbon atoms.

3. The process as claimed in claim 1 or 2, wherein the radical R¹ has at most 18 carbon atoms.

4. The process as claimed in any of claims 1 to 3, wherein the radical R² has at most 18 carbon atoms.

5. The process as claimed in any of claims 1 to 4, wherein the radical X is a chlorine atom or an alkoxy radical having from 1 to 6 carbon atoms, which radical is unsubstituted or substituted by fluorine, chlorine or bromine atoms or cyano groups.

6. The process as claimed in any of claims 1 to 5, wherein the activator has at most 18 carbon atoms.

7. The process as claimed in any of claims 1 to 6, wherein the amount of activator is 0.1 - 10 % by weight of the total mixture.

8. The process as claimed in any of claims 1 to 7, wherein the mono- and dialkylsilanes of the general formula (II) which are used are prepared in the same reactor in which the process for preparing the di- and trialkylsilanes of the general formula (I) is carried out and wherein silanes of the general formula (III)
R² _{b}SiH_{d}X_{c} (III),
are reacted with alkenes B having at least 2 carbon atoms, which alkenes are unsubstituted or substituted by fluorine, chlorine or bromine atoms or cyano groups,
in the presence of a transition metal catalyst, where
d is 2 or 3 and
R², X, b and c are as defined above.

## Revendications (Revendications pour l'(les) Etat(s) contractant(s) suivant(s): IT, NL)

1. Procédé de préparation de dialkylsilanes et de trialkylsilanes de formule générale (I)
RₐR¹R² _{b}SiX_{c} (I),
qui comprend la mise en réaction de monoalkylsilanes et dialkylsilanes de formule générale (II)
R¹R² _{b}SiHₐX_{c} (II),
avec des alcènes A ayant au moins 4 atomes de carbone, lesquels alcènes sont non substitués ou substitués par des atomes de fluor, de chlore ou de brome ou par des groupements cyano, en présence d'un catalyseur à métaux de transition et d'un hydrocarbure en tant qu'agent d'activation, lequel hydrocarbure a au moins un groupement fonctionnel choisi parmi les groupements aldéhyde, cétone et époxyde ou parmi les atomes d'halogène,
dans lequel, dans les formules générales ci-dessus (I) et (II),
R est un radical d'hydrocarbure ramifié ou cyclique ayant au moins 4 atomes de carbone, lequel radical est non substitué ou substitué par des atomes de fluor, de chlore ou de brome ou par des groupements cyano,
R¹ est un radical alkyle ayant au moins 2 atomes de carbone, lequel radical est non substitué ou substitué par des atomes de fluor, de chlore ou de brome ou par des groupements cyano,
R² est un radical alkyle ayant au moins deux atomes de carbone, lequel radical est non substitué ou substitué par des atomes de fluor, de chlore ou de brome ou par des groupements cyano,
X est un atome de fluor, de chlore ou de brome ou un radical alkoxy ayant de 1 à 18 atomes de carbone, lequel radical est non substitué ou substitué par des atomes de fluor, de chlore ou de brome ou par des groupements cyano,
a est 1 ou 2,
b est 0 ou 1 et
c est 1 ou 2.

2. Procédé selon la revendication 1, caractérisé en ce que les alcènes A sont ramifiés ou cycliques et ont jusqu'à 18 atomes de carbone.

3. Procédé selon la revendication 1 ou 2, caractérisé en ce que le radical R¹ a au plus 18 atomes de carbone.

4. Procédé selon l'une quelconque des revendications 1 à 3, caractérisé en ce que le radical R² a au plus 18 atomes de carbone.

5. Procédé selon l'une quelconque des revendications 1 à 4, caractérisé en ce que le radical X est un atome de chlore ou un radical alkoxy ayant de 1 à 6 atomes de carbone, lequel radical est non substitué ou substitué par des atomes de fluor, de chlore ou de brome ou par des groupements cyano.

6. Procédé selon l'une quelconque des revendications 1 à 5, caractérisé en ce que l'agent d'activation a au plus 18 atomes de carbone.

7. Procédé selon l'une quelconque des revendications 1 à 6, caractérisé en ce que la quantité d'agent d'activation est de 0,1 - 10 % en poids du mélange total.

8. Procédé selon l'une quelconque des revendications 1 à 7, caractérisé en ce que les monoalkylsilanes et les dialkylsilanes de la formule générale (II), qui sont utilisés, sont préparés dans le même réacteur que celui dans lequel l'on effectue le procédé de préparation des dialkylsilanes et des trialkylsilanes de la formule générale (I), et en ce que l'on fait réagir des silanes de formule générale (III)
R² _{b}SiH_{d}X_{c} (III),
avec des alcènes B ayant au moins 2 atomes de carbone, lesquels alcènes sont non substitués ou substitués par des atomes de fluor, de chlore ou de brome ou par des groupements cyano, en présence d'un catalyseur à métaux de transition, où
d est 2 ou 3 et
R², X, b et c sont comme définis ci-dessus.

## Revendications (Revendications pour l'(les) Etat(s) contractant(s) suivant(s): DE, FR, GB)

1. Procédé de préparation de dialkylsilanes et de trialkylsilanes de formule générale (I)
RₐR¹R² _{b}SiX_{c} (I),
lors duquel on fait réagir des monoalkylsilanes et des dialkylsilanes de formule (II)
R¹R² _{b}SiHₐX_{c} (II),
avec des alcènes A ayant au moins 4 atomes de carbone, lesquels alcènes sont substitués, le cas échéant, par des atomes de fluor, de chlore ou de brome ou par des groupements cyano,
en présence d'un catalyseur à métaux de transition et d'un hydrocarbure en tant qu'agent d'activation, lequel hydrocarbure présente au moins un groupement fonctionnel choisi parmi les groupements aldéhyde, cétone et époxyde ou parmi les atomes d'halogène, à l'exception de cétones insaturées des formules
R⁵CO(CH₂)ₙCH=CR³R⁴
ou
COCH=CR³(CR³ ₂)ₘ,
dans lesquelles
R⁵ représente des radicaux alkyles ayant de 1 à 12 atomes de carbone,
R³ représente des atomes d'hydrogène ou des radicaux alkyles ayant de 1 à 4 atomes de carbone,
R⁴ représente des atomes d'hydrogène ou des radicaux d'hydrocarbure monovalents non aryles ayant de 1 à 12 atomes de carbone,
n représente les valeurs 0 à 4 et
m représente les valeurs 1 à 17,
R représentant un radical d'hydrocarbure ramifié ou cyclique ayant au moins 4 atomes de carbone, substitué, le cas échéant, par des atomes de fluor, de chlore ou de brome ou par des groupements cyano,
R¹ représentant un radical alkyle ayant au moins 2 atomes de carbone, substitué, le cas échéant, par des atomes de fluor, de chlore ou de brome ou par des groupements cyano,
R² représentant un radical d'hydrocarbure ayant au moins deux atomes de carbone, substitué, le cas échéant, par des atomes de fluor, de chlore ou de brome ou par des groupements cyano,
X représentant un atome de fluor, de chlore ou de brome ou un radical alkoxy ayant de 1 à 18 atomes de carbone, substitué, le cas échéant, par des atomes de fluor, de chlore ou de brome ou par des groupements cyano,
a représentant les valeurs 1 ou 2,
b représentant les valeurs 0 ou 1 et
c représentant les valeurs 1 ou 2, dans les formules générales ci-dessus (I) et (II).

2. Procédé selon la revendication 1, caractérisé en ce que les alcènes A sont ramifiés ou cycliques et ont jusqu'à 18 atomes de carbone.

3. Procédé selon la revendication 1 ou 2, caractérisé en ce que le radical R¹ a au plus 18 atomes de carbone.

4. Procédé selon l'une quelconque des revendications 1 à 3, lors duquel le radical R² a au plus 18 atomes de carbone.

5. Procédé selon l'une quelconque des revendications 1 à 4, lors duquel le radical X représente un atome de chlore ou un radical alkoxy ayant de 1 à 6 atomes de carbone, substitué, le cas échéant, par des atomes de fluor, de chlore ou de brome ou par des groupements cyano.

6. Procédé selon l'une quelconque des revendications 1 à 5, caractérisé en ce que l'agent d'activation a au plus 18 atomes de carbone.

7. Procédé selon l'une quelconque des revendications 1 à 6, caractérisé en ce que la quantité d'agent d'activation est de 0,1 - 10 % en poids du mélange total.

8. Procédé selon l'une quelconque des revendications 1 à 7, caractérisé en ce que les monoalkylsilanes et les dialkylsilanes de la formule générale (II), qui sont utilisés, sont préparés dans le même réacteur que celui dans lequel l'on effectue le procédé de préparation des dialkylsilanes et des trialkylsilanes de la formule générale (I), et en ce que l'on fait réagir des silanes de formule générale (III)
R² _{b}SiH_{d}X_{c} (III),
avec des alcènes B ayant au moins 2 atomes de carbone, lesquels alcènes sont non substitués ou substitués par des atomes de fluor, de chlore ou de brome ou par des groupements cyano, en présence d'un catalyseur à métaux de transition, où
d est 2 ou 3 et
R², X, b et c sont comme définis ci-dessus.
